Europäisches Patentamt

European Patent Office

Office européen des brevets

(11) Numéro de publication: **0 284 502 B1**

(19)

## FASCICULE DE BREVET EUROPEEN

(12)

(45) Date de publication de fascicule du brevet: **16.09.92**

(21) Numéro de dépôt: **88400644.6**

(22) Date de dépôt: **18.03.88**

(51) Int. Cl.⁵: **A23L 1/015**, A23L 1/277, //A23L1/325

(54) **Procédé et dispositif de traitement de chair animale, notamment de poisson, en vue sa décoloration et de sa désodorisation.**

(30) Priorité: **19.03.87 FR 8703793**

(43) Date de publication de la demande:
**28.09.88 Bulletin 88/39**

(45) Mention de la délivrance du brevet:
**16.09.92 Bulletin 92/38**

(84) Etats contractants désignés:
**BE DE ES FR GB IT NL SE**

(56) Documents cités:
**DE-A- 3 209 930**
**FR-A- 385 815**
**FR-A- 797 928**

**FOOD SCIENCE & TECHNOLOGY ABS-
TRACTS, no. 79-02-s0309, (79011284); P.P.W.
YANG et al.: "Effects of ozone treatment on
shelf life and microflora of poultry meat", &
International Congress of Food Science &
Technology - Abstracts, p. 262, 1978**

**PATENT ABSTRACTS OF JAPAN, vol. 5, no.
200 (C-84)[872], 18 décembre 1981**

(73) Titulaire: **COMPAGNIE DES EAUX ET DE
L'OZONE CEO
4, rue du Général Foy
F-75381 Paris Cédex 08(FR)**

Titulaire: **ASSOCIATION POUR LE DEVELOP-
PEMENT ET DE LA RECHERCHE APPLIOUEE
AUX INDUSTRIES AGRICOLES ET ALIMENTAI-
RES (ADRIA)
6, rue de l'Université
F-29191 Ouimper(FR)**

(72) Inventeur: **Coudrains, Louis
12, rue du Ménéguen
F-56350 Oueven(FR)**
Inventeur: **Starck, Emmanuel
3, rue du Berry
F-29000 Ouimper(FR)**

(74) Mandataire: **Portal, Gérard et al
Cabinet Beau de Loménie 55, rue d'Amsterdam
F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

"Perspectives internationales de l'emploi de l'ozone" par J-P. Legeron, Stage no. 3 d'Insko, 9-10 Octobre 1980, Espoo, Finlande

"Wasser" par K. Höll, 7. Auflage, Walter de Gruyter, 1986, pages 87-88

"Encyclopedia of Chemical Technology" par Kirk-Othmer, 3rd Ed., Vol. 16, John Wiley & Sons, 1981, pages 700-703

"Unit Operations of Chemical Engineering" par McCabe et al., 3rd ed., McGraw-Hill Kogakusha Ltd., 1976, page 609

"Food process Engineering" par P. Linko et al., Vol. 1, Applied Science Publications Ltd., 1975, page 427

## Description

L'invention concerne un procédé, notamment en continu, de traitement de chair animale en vue de sa décoloration et de sa désodorisation. Elle concerne également le dispositif destiné à la mise en oeuvre de ce procédé. L'invention est plus particulièrement appliquée au traitement de la chair de poisson.

Un problème se pose au niveau de la valorisation des chairs animales encore récupérables sur les carcasses, qu'il s'agisse des os ou des arêtes après la dernière opération de désossage ou de filetage. Il se pose plus particulièrement dans l'industrie de transformation des produits de la mer. Par exemple, après le filetage du poisson (séparation des filets), il reste sur les arêtes et la tête, une partie de chair non négligeable. Une séparation manuelle serait trop longue et fastidieuse. C'est pourquoi des procédés mécaniques de séparation on tété mis au point et ceci est vrai pour la viande, pour le poisson, les crustacés, etc...

Ces procédés, notamment pour les poissons, permettent de séparer la chair résiduelle des cartilages et des arêtes et de l'utiliser ensuite comme matière première pour la fabrication de différents produits.

Malheureusement, les chairs ainsi obtenues présentent une odeur plus ou moins accentuée suivant les caractéristiques du poisson et une coloration non satisfaisante, dépendant à la fois de sa nature et de la teneur en sang résiduel,etc...

On a déjà proposé divers procédés utilisant l'ozone, en vue de stériliser de la chair animale, en particulier la chair de poisson, de manière à former une pâte de poisson (voir demande japonaise JP-A-121462).

De même, le document FR-A-385 815 décrit un procédé de stérilisation des huîtres par l'ozone en faisant arriver un courant d'ozone par une série de tubes disposés dans la paroi inférieur d'un bassin, pour qu'il traverse le liquide du bassin et pénètre également à l'intérieur des huîtres (page 1, lignes 34 à 43).

Encore, le document FR-A-797 928 est relatif à un procédé de préparation d'eau de mer ou d'eau douce convenablement ozonisée pour le lavage du poisson fraîchement pêché. Ce document décrit également une installation pour préparer de l'eau ozonisée.

Encore, le document DE-A-32 090930 concerne un procédé d'élimination d'aflatoxine dans les produits alimentaires par un traitement avec un gaz dans une chambre à vide, ce gaz pouvant être notamment de l'air enrichi en ozone.

On connaît encore par le document "Perspectives internationales de l'emploi de l'ozone" JP LEGERON, stage n° 3 d'Insko, 9-10 octobre 1980, Espoo, Finlande des procédés et dispositifs d'ozonation d'eau en vue de sa purification. Il est également envisagé d'autres emplois d'ozone dans l'industrie, par exemple pour la synthèse industrielle de Pipéronal ou l'ozonolys d'acide gras ou du cyclotriène, ou encore l'ozonation des pâtes à papier.

Il est prévu comme autre application possible de l'ozone, la fabrication de glace à partir d'eau ozonée pour la conservation des poissons ou la conservation de denrées alimentaires sous atmosphère ozonée mais aucun traitement direct de chair de poisson avec l'ozone en est envisagé.

Par ailleurs, le document "Wasser",par Karl Höll, 7.Auflage, Walter de Gruyter, 1986 pages 87-88 décrit un traitement de l'eau à l'ozone afin d'éliminer les odeurs ainsi que les colorations des eaux usées. Aucun dispositif particulier n'est décrit.

Il est encore connu par le document "Encyclopedia of Chemical Technology" par Kirk-Othmer, 3ème édition, volume 16, John Wiley & Sons, 1981, pages 700-703 le traitement de l'eau avec de l'ozone. Il est indiqué que l'emploi de bulles d'ozone de dimension la plus faible possible augmente l'aire spécifique pour un volume donné d'air dispersé et que la dimension des bulles peut être contrôlée par un diffuseur d'ozone. Les utilisations envisagées sont les utilisations habituelles et notamment le traitement de l'eau. Aucun dispositif particulier n'est décrit et il n'est étudié que la vitesse de remontée à la surface de l'eau des bulles d'ozone en fonction de leur rayon en référence à la figure 13.

Egalement, sont connus par le document "Unit opération of chemical engineering" par McCabe et al, 3ème édition, Mc Graw-Hill Kogakusha Ltd, 1976, page 609 des extracteurs de lessivage à vis de transfert. Il n'est pas prévu d'adapter un tel dispositif pour le traitement à l'ozone en général, ni le traitement de poisson.

Ainsi, l'état de la technique dans son ensemble divulguait de manière générale l'emploi d'ozone en particulier pour la purification des eaux usées. Certains documents isolés prévoyaient des procédés utilisant l'ozone avec pour but unique ou essentiel d'aboutir à une stérilisation de la chair et pas à une décoloration ainsi qu'une désodorisation.

Si une certaine décoloration ou désodorisation était réalisée, celle-ci était nettement insuffisante, de sorte qu'au cours du temps, une nouvelle coloration de la chair pouvait avoir lieu ainsi que le développement de mauvaises odeurs.

La présente invention a pour but de pallier ces inconvénients et concerne un procédé capable d'agir à la fois sur la couleur de la chair et sur son odeur, ce qui permet une meilleure valorisation de la matière et la fabrication de produits mieux élaborés.

Elle concerne également un dispositif adapté au traitement en continu de chair animale mettant en oeuvre de l'ozone.

La présente invention a également pour but de résoudre le nouveau problème technique consistant en la fourniture d'un procédé et d'un dispositif de traitement de chair animale, en particulier de la chair de poisson, aboutissant à sa décoloration et sa désodorisation complète, en continu, d'une manière extrêmement simple, fiable, pouvant être réglée à volonté, à un faible coût, utilisable à l'échelle industrielle.

Selon un premier aspect, la présente invention fournit un dispositif de traitement de chairs animales comprenant une enveloppe définissant une chambre de barbotage, des moyens d'introduction respectivement de chairs et d'eau dans ladite chambre ainsi que des moyens d'injection d'ozone ou d'air contenant de l'ozone dans ladite chambre dans laquelle un mélange de chair et d'eau est mis en contact avec l'ozone, caractérisé en qu'il comprend dans ladite enveloppe un tube creux muni d'une cloison hélicoïdale dont le pas est p, monté rotatif relativement à l'enveloppe, l'ensemble dudit tube creux et de ladite cloison hélicoïdale constituant une vis de transfert, et le volume libre existant entre ladite paroi interne de cette enveloppe et du tube constituant ladite chambre de barbotage.

Selon une variante de réalisation, les moyens d'injection d'ozone précités dans la chambre de barbotage comprennent une pluralité de diffuseurs.

Selon une autre caractéristique du dispositif, les diffuseurs ont un diamètre de pores calibré compris entre 60 et 90 micromètres.

Selon une variante de réalisation, les diffuseurs sont, pour chaque pas, au nombre de deux, formant un couple se faisant vis à vis, et en ce que chaque couple fait un angle de 90° par rapport au couple du pas contigu amont et du pas contigu aval.

Selon une autre variante de réalisation, le tube est fermé à ses extrémités par deux cloisons.

Selon une autre caractéristique du dispositif, le tube comporte une cloison intermédiaire délimitant une première chambre et une seconde chambre dites respectivement chambre de préozonification et chambre de postozonification.

Selon une variante de réalisation, dans chacune des chambres débouche un injecteur destiné à injecter l'ozone sous une pression dite de préozonification, et une pression dite de postozonification.

Selon une autre caractéristique du dispositif, le rapport de l'ozone exprimé en gramme d'ozone par kilogramme de chair traitée est compris entre 0,3 et 0,9.

Selon une variante de réalisation, le rapport de l'ozone exprimé en g d'ozone par kg de chair traité est environ 0,7 dans la chambre de préozonification et d'environ 0,8 dans la chambre de postozonification.

Selon une variante de réalisation, les moyens d'introduction précités réalisent l'introduction d'air contenant de 10 à 15 grammes d'ozone par $Nm^3$ d'air.

Selon une autre caractéristique du dispositif, le rapport chairs/eau est voisin de 1 à 3.

Selon une autre caractéristique, l'enveloppe est inclinée par rapport à l'horizontale d'un angle pouvant aller jusqu'à 90°.

Selon une variante de réalisation du dispositif, l'enveloppe est disposée verticalement, des moyens d'injection d'ozone ou de l'air étant disposés à la base du dispositif et des moyens d'alimentation des chairs étant disposés en haut du dispositif, de telle sorte que l'ozone chemine à contre-courant relativement aux chairs.

Selon une autre caractéristique du dispositif, la vis de transfert est mise en rotation au moyen d'un bloc moto-variateur.

Selon une variante de réalisation, chaque diffuseur (30) est maintenu en place dans un support solidaire du tube, ce support étant percé d'un orifice calibré.

Selon un deuxième aspect, l'invention fournit un procédé de traitement de chairs animales comprenant la prévision d'une enveloppe définissant une chambre de barbotage, des moyens d'introduction respectivement de chairs et d'eau dans ladite chambre, et des moyens d'injection d'ozone ou d'air contenant de l'ozone dans ladite chambre, caractérisé en ce qu'on prévoit un tube creux muni d'une cloison hélicoïdale dont le pas est p dans ladite enveloppe, montée rotative relativement à ladite enveloppe, l'ensemble constituant une vis de transfert, et en ce qu'on injecte l'ozone ou l'air contenant l'ozone dans le volume libre existant entre la paroi interne de l'enveloppe et le tube, on réalise un contact de la chair mélangée avec l'eau et l'ozone pendant une durée suffisante pour aboutir à une décoloration et à une désodorisation sensiblement complète des chairs.

Selon une variante de réalisation avantageuse du procédé, l'injection d'ozone est réalisée avec des bulles d'ozone de diamètre calibré par injection à travers des diffuseurs ayant un diamètre de pores calibré compris entre 60 et 90 micromètres.

Selon une variante de réalisation du procédé, le traitement avec l'ozone est réalisé dans deux zones de traitement indépendantes, une première zone dite de préozonification et une deuxième zone dite de postozonification, le débit d'air contenant l'ozone est introduit à un débit volumétrique plus faible dans la zone de préozonification par rapport au débit volumétrique de la zone de postozonification, en particulier le débit dans la zone de préozonification est environ égal à la moitié du débit dans la zone de postozonification.

Le dispositif selon l'invention est adapté au traitement continu des chairs animales et permet de mettre en oeuvre un procédé de traitement des chairs d'une manière extrêmement simple et versatile, adaptable à tous types et qualités de chair animale avec des réglages extrêmement simples.

L'invention sera mieux comprise à l'aide des explications qui vont suivre et des figures jointes parmi lesquelles :

- la figure 1 est une vue générale du dispositif de mise en oeuvre du procédé conforme à l'invention ;
- la figure 2 est une section partielle selon (AA) du dispositif de la figure 1.

Pour plus de clarté, les mêmes éléments portent les mêmes références sur toutes les figures.

Le procédé, capable de modifier la couleur et/ou l'odeur de la chair animale selon l'invention, consiste essentiellement à mettre en contact cette chair à traiter avec de l'ozone pendant une durée de traitement suffisante pour obtenir la décoloration et la désodorisation de la chair. On sait que ce gaz se rencontre dans la nature mais qu'il peut être obtenu artificiellement lorsque l'on soumet de l'air à une décharge électrique. L'ozone, en se dissociant, libère une molécule et un atome d'oxygène. Cet atome agit principalement au niveau de l'oxydation. Les demandeurs ont observé que l'action de l'ozone sur la chair, notamment la chair de poisson, a le pouvoir de modifier sa coloration et d'atténuer, voire faire disparaître son odeur. La mise en contact de la chair avec de l'ozone se fait par barbotage d'ozone dans un mélange de chair et d'eau.

Pour que le procédé produise un effet optimal, il est préférable d'assurer une distribution d'ozone sous forme de bulles aussi petites que possible et capables d'agir sur une surface maximale du produit à traiter. On doit donc, en fonction du résultat recherché, agir sur un certain nombre de paramètres dont les principaux sont la texture de la chair elle-même et la qualité de la diffusier de l'ozone qui doit atteindre la totalité des particules de chair.

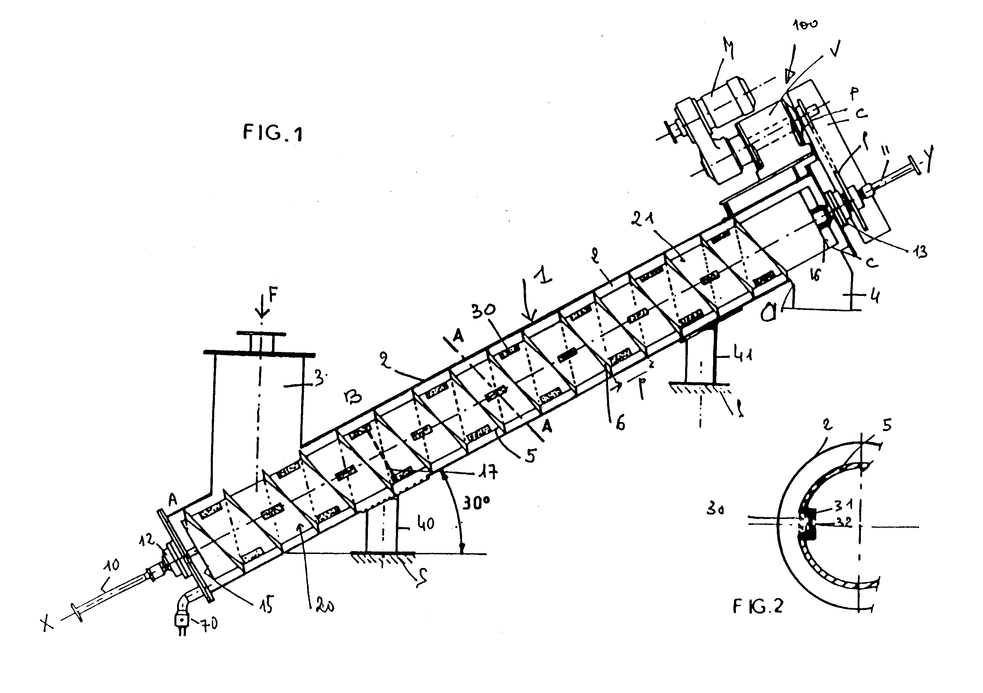

Les figures 1 et 2 illustrent schématiquement un dispositif (1) destiné à la mise en oeuvre du procédé selon l'invention. Un tel dispositif (1) est constitué d'une enveloppe (2) d'axe (xy) équipée d'une trémie (3) d'alimentation en produit à traiter et d'une goulotte (4) d'évacuation du produit. Ce dernier est introduit dans la trémie (3) selon la flèche (F), au moyen d'une pompe de gavage non représentée sur les figures.

Dans cette enveloppe (2) dont l'axe est confondu avec l'axe (xy) tourne un tube creux (5). L'intervalle (e) entre l'enveloppe (2) et ce tube (5) constitue la chambre de barbotage ou de traitement avec l'ozone. Une cloison hélicoïdale (6), à un pas (p) déterminé dont le diamètre extérieur tangente le diamètre intérieur de l'enveloppe, est soudée sur la périphérie extrême du tube (5) sur toute sa longueur. L'ensemble constitue une vis de transfert (5,6) capable de prendre en charge la chair issue de la trémie d'entrée (3) pour l'emmener vers la goulotte de sortie (4). Pour que ce transfert s'effectue sans à-coups et dans de bonnes conditions, le gavage de la trémie doit être assuré. La vis de transfert (5,6) est entraînée en rotation autour de l'axe (xy) au moyen d'un groupe moteur (100) constitué essentiellement d'un moteur (M) et d'un variateur (V) coopérant avec un jeu de poulies (P) contenu dans un carter (C).

Selon une caractéristique importante de l'invention, de l'ozone est introduit à chacune des extrémités du tube creux (5) par des injecteurs (10) et (11) montés au moyen de joints rotatifs spéciaux (12) et (13) qui assurent l'étanchéité et évitent la rotation des injecteurs tout en permettant celle de la vis de transfert. Le volume intérieur du tube creux est délimité par les cloisons extrêmes (15) et (16) et par une cloison intermédiaire (17) qui séparent ce volume intérieur en une première et une seconde chambres (20) et (21) dites respectivement chambres de préozonification et de postozonification.

Selon une autre caractéristique importante de l'invention, l'ozone fourni de manière connue par un ozoneur (non représenté sur les figures) est injecté, par exemple sous une pression de 5 KPa dans chacune des chambres (20) et (21) au moyen des injecteurs (10) et (11), et est diffusé à travers des diffuseurs (30) régulièrement répartis sur la surface externe du tube creux (5). Le débit de l'air contenant l'ozone est par exemple de 4 $Nm^3$ par heure dans la chambre de préozonification (20) et de 7 $Nm^3$ dans la chambre de postozonification (21). Par exemple, le rapport de l'ozone exprimé en g d'ozone par kg de chair traitée est d'environ 0,7 dans la chambre de préozonification et d'environ 0,8 dans la chambre de postozonification. La durée totale de traitement est au minimum d'environ 4 minutes, ce qui est habituellement utilisé pour des chairs blanches et peut varier jusqu'à 6 minutes en particulier pour des chairs rouges. Le dosage de l'ozone dans l'air est avantageusement compris entre 10 et 15 g d'ozone par $Nm^3$ d'air.

Dans un exemple de réalisation préféré de l'invention, ces diffuseurs (30) sont disposés au niveau de chaque pas (p) de la vis de transfert (5,6). Il sont au nombre de deux, se faisant face, et chaque couple ainsi formé est décalé de 90° à chaque pas. Cette configuration permet d'assurer une diffusion régulière de l'ozone dans la totalité du volume de la chambre de barbotage (e). Il s'agit par exemple de diffuseurs poreux constitués de matières minérales telles que les silicoaluminates, de granulométrie choisie en fonction de l'application considérée. Cette matière minérale est mélangée à un liant compatible avec l'ozone, puis pressée et cuite sous haute température. On obtient ainsi une porosité de 60 à 90 micromètres qui permet une diffusion de l'ozone dans l'eau sous forme de bulles de 2 à 4 micromètres de diamètre. Comme le montre plus particulièrement la figure 2, chaque diffuseur en céramique (30) est mis en place dans un support (31) solidaire de la paroi interne du tube creux (5). Les diffuseurs (30) sont commercialisés par le CEO sous la dénomination TRAILIGAZ[(R)].

Selon une caractéristique de l'invention, ce support (31) est percé d'un orifice calibré (32) dont la fonction est de limiter le débit d'ozone au niveau d'un diffuseur qui serait malencontreusement détérioré.

La mise en oeuvre du procédé est maintenant décrite. Un mélange de chair à traiter et d'eau préalablement introduit à partir de la trémie (3) dans la chambre de barbotage (e), progresse grâce à la vis de transfert (5,6) mise en rotation. Sur la première partie de son trajet (AB) correspondant sensiblement à la longueur de la chambre (20) de préozonification, le mélange est mis en contact avec de l'ozone introduit dans cette première chambre (20), au moyen de l'injecteur (10), sous une première pression, dite pression de préozonification (p1).

Sur la seconde partie de son trajet (BC) correspondant sensiblement à la longueur de la chambre de postozonification (21), le mélange continue à se trouver en contact avec l'ozone introduit cette fois sous une seconde pression (p2), dite pression de postozonification, au moyen de l'injecteur (11). Comme chaque pas (p) comporte au moins un couple de diffuseurs (30) se faisant vis-à-vis, chaque couple étant décalé à chaque pas de 90° par rapport au couple adjacent en amont et en aval, la diffusion de l'ozone est optimale sur toute la paroi externe du tube (4).

Selon une caractéristique de l'invention, le dispositif conforme à l'invention est supporté par des pieds (40,41) de telle sorte qu'il se trouve incliné par rapport à l'horizontal (5) d'un angle (alpha) par exemple de 30°. Cette disposition permet à l'eau, en arrivant en fin de parcours, de retomber par gravité le long de la chambre de barbotage (e), ce qui permet à l'ozone d'accomplir sa fonction dans de bonnes conditions. Pour procéder au nettoyage du dispositif, on introduit de l'eau dans sa partie haute, on inverse le sens de rotation de la vis de transfert (5,6) et on recueille l'eau souillée au moyen d'une vanne de vidange (70).

L'architecture du dispositif conforme à l'invention permet de maîtriser les paramètres essentiels qui conditionnent le résultat recherché. En effet, on peut adapter la vitesse de rotation de la vis de transfert (5,6), grâce notamment au moto-variateur (100) et donc optimiser la vitesse de transfert du produit à traiter, et donc, le temps de contact de la chair avec l'ozone, aussi bien durant la phase de préozonification (temps t1) que durant celle de postozonification (temps t2).

La présente de deux chambres (20) et (21), avec lesquelles coopèrent deux injecteurs indépendants (10, 11), permet de régler la concentration et le débit de gaz le long du trajet de la chair, en relation avec la porosité des diffuseurs (30). La combinaison de tous ces paramètres conduit d'une part à modifier la couleur des chairs traitées pour obtenir la coloration désirée, et d'autre part à faire disparaître les odeurs indésirables.

Dans un exemple de réalisation et pour une application au traitement du poisson, la vitesse moyenne de transfert de la chair est de l'ordre de 0,010 m/s, et la porosité des céramiques est voisine de 60 à 90 micromètres. L'orifice calibré (32) est de l'ordre de huit millimètres. Le mélange de chair et d'eau se fait dans un rapport voisin de un à trois (exemple : 3 litres d'eau pour 1 kg de chair de poisson).

On a décrit un diffuseur en céramique mais il s'agit là d'un exemple nullement limitatif. Tout matériau résistant à l'ozone et présentant une porosité compatible avec l'application peut être choisi.

Le procédé et le dispositif conformes à l'invention trouvent leur application notamment dans le traitement industriel de viande et de chair de poisson. Il s'agit d'un matériel que l'on peut adapter en fonction de la quantité de chair à traiter et qui est donc modulable et peut s'intégrer dans une installation de traitement en continu.

Diverses réalisations du procédé du dispositif sont possibles en particulier l'inclinaison du dispositif est variable. Celui-ci peut même être disposé verticalement, l'injection de l'ozone ou de l'air étant réalisée à la base du dispositif et les chairs étant alimentées en haut du dispositif de telle sorte que l'ozone chemine à contre-courant relativement aux chairs.

**Revendications**

1. Dispositif de traitement de chairs animales comprenant une enveloppe définissant une chambre de barbotage, des moyens d'introduction respectivement de chairs et d'eau dans ladite chambre ainsi que des moyens d'injection d'ozone ou d'air contenant de l'ozone dans ladite chambre dans laquelle un mélange de chair et d'eau est mis en contact avec l'ozone, ledit dispositif comprenant dans ladite enveloppe (2) un tube creux (5) muni d'une cloison hélicoïdale (6) dont le pas est p, monté rotatif relativement à l'enveloppe, l'ensemble dudit tube creux et de ladite cloison hélicoïdale constituant une vis (5,6) de transfert, et le volume libre existant entre ladite paroi interne de cette enveloppe (2) et du tube (5) constituant ladite chambre (e) de barbotage.

2. Dispositif selon la revendication 1, dont les moyens d'injection d'ozone précités dans la chambre de barbotage (e) comprennent une pluralité de diffuseurs (30).

3. Dispositif selon la revendication 2, dont les diffuseurs (30) ont un diamètre de pores calibré compris entre 60 et 90 micromètres.

4. Dispositif selon la revendication 2 ou 3, dont les diffuseurs (30) sont, pour chaque pas, au nombre de 2, formant un couple se faisant vis à vis, et en ce que chaque couple fait un angle de 90° par rapport au couple du pas contigu amont et du pas contigu aval.

5. Dispositif selon les revendications 1 à 4, dont le tube (5) est enfermé à ses extrémités par deux cloisons (15) et (16).

6. Dispositif selon l'une des revendications 1 à 5, dont le tube (5) comporte une cloison intermédiaire (17) délimitant une première chambre (20) et une seconde chambre (21) dites respectivement chambre de préozonification et chambre de postozonification.

7. Dispositif selon la revendication 6, selon lequel dans chacune des chambres (20) et (21) débouche un injecteur (10, 11) destiné à injecter l'ozone sous une pression (p1) dite de préozonification, et une pression (p2), dite de postozonification.

8. Dispositif selon l'une des revendication 1 à 7, selon lequel le rapport de l'ozone exprimé en gramme d'ozone par kilogramme de chair traitée est compris entre 0,3 et 0,9.

9. Dispositif selon l'une des revendications 6 à 8, selon lequel le rapport de l'ozone exprimé en g d'ozone par kg de chair traité est environ 0,7 dans la chambre de préozonification et d'environ 0,8 dans la chambre de postozonification.

10. Dispositif selon l'une des revendications 1 à 9, dont les moyens d'introduction précités réalisent l'introduction d'air contenant de 10 à 15 grammes d'ozone par $Nm^3$ d'air.

11. Dispositif selon l'une des revendications 1 à 10, dont le rapport chairs/eau est voisin de 1 à 3.

12. Dispositif selon l'une des revendications 1 à 11, dont l'enveloppe (2) est inclinée par rapport à l'horizontale (s) d'un angle pouvant aller jusqu'à 90°.

13. Dispositif selon l'une des revendications 1 à 12, dont l'enveloppe (2) est disposée verticalement, des moyens d'injection d'ozone ou de l'air étant disposés à la base (en 10) du dispositif et des moyens d'alimentation des chairs étant disposés en haut du dispositif, de telle sorte que l'ozone chemine à contre-courant relativement aux chairs.

14. Dispositif selon l'une des revendications 1 à 13, dont la vis de transfert (5,6) est mise en rotation au moyen d'un bloc moto-variateur (100).

15. Dispositif selon l'une des revendications 2 à 14, dont chaque diffuseur (30) est maintenu en place dans un support (31) solidaire du tube (5), ce support (31) étant percé d'un orifice calibré (32).

16. Procédé de traitement de chairs animales comprenant la prévision d'une enveloppe définissant une chambre de barbotage, des moyens d'introduction respectivement de chairs et d'eau dans ladite chambre, et des moyens d'injection d'ozone ou d'air contenant de l'ozone dans ladite chambre, on prévoit un tube creux (5) muni d'une cloison hélicoïdale (6) dont le pas est p dans ladite enveloppe (2), montée rotative relativement à ladite enveloppe (2), l'ensemble constituant une vis (5, 6) de transfert, et en ce qu'on injecte l'ozone ou l'air contenant l'ozone dans le volume libre existant entre la paroi interne de l'enveloppe (2) et le tube (5), on réalise un contact de la chair mélangée avec l'eau avec l'ozone pendant une durée suffisante pour aboutir à une décoloration et à une désodorisation sensiblement complète des chairs.

17. Procédé selon la revendication 16, dont l'injection d'ozone est réalisée avec des bulles d'ozone de diamètre calibré par injection à travers des diffuseurs ayant un diamètre de pores calibré compris entre 60 et 90 micromètres.

18. Procédé selon la revendication 16 ou 17, dont on réalise le traitement avec l'ozone dans deux zones de traitement indépendantes, une première zone dite de préozonification et une deuxième zone dite de postozonification, le débit d'air contenant l'ozone est introduit à un débit volumétrique plus faible dans la zone de préozonification par rapport au débit volumétrique de la zone de postozonification, en particulier le débit dans la zone de préozonification est environ égal à la moitié du débit dans la zone de postozonification.

**Claims**

1. Device for treating animal flesh, comprising an envelope defining a bubbling chamber, means for respectively introducing flesh and water into said chamber as well as means for injecting ozone or ozone-containing air into said chamber in which a mixture of flesh and water is placed in contact with the ozone, said device comprising in said envelope (2) a hollow tube (5) provided with a helical wall (6) of pitch (p), mounted for rotating relatively to the envelope, the assembly of said hollow tube and said helical wall constituting a transfer screw (5,6), and the free space existing between said inner wall of said envelope (2) and of the tube (5) constituting a bubbling chamber (e).

2. Device according to claim 1, characterized in that said means for injecting ozone into the bubbling chamber (e) comprise a plurality of diffusers (30)

3. Device according to claim 2, of which the diffusers (30) have a pore diameter ranging between 60 and 90 micrometers.

4. Device according to claim 2 or 3, of which the diffusers (30) are two in number for every pitch, forming a pair in facing relationship and in that each pair forms an angle of 90° with respect to the pair of the next pitch upstream and of the next pitch downstream.

5. Device according to claims 1 to 4, of which the tube (5) is closed at its ends by two walls (15) and (16).

6. Device according to one of claims 1 to 5, of which the tube (5) comprises an intermediate wall (17) defining a first chamber (20) and a second chamber (21), called respectively preozonification chamber and postozonification chamber.

7. Device according to claim 6, according to which an injector (10, 11) opens in each one of chambers (20) and (21) for the purpose of injecting ozone under a pressure (p1) called preozonification pressure, and a pressure (p2), called postozonification pressure.

8. Device according to one of claims 1 to 7, according to which the ozone ratio expressed in gramme of ozone per kilogramme of treated flesh is comprised between 0.3 and 0.9.

9. Device according to one of claims 6 to 8, according to which the ozone ratio expressed in g of ozone per kg of treated flesh is about 0.7 in the preozonification chamber and about 0.8 in the postozonification chamber.

10. Device according to one of claims 1 to 9, of which said introduction means introduce air containing from 10 to 15 grammes of ozone per Nm3 of air.

11. Device according to one of claims 1 to 10, of which the flesh/water ratio is around 1 to 3.

12. Device according to one of claims 1 to 11, of which the envelope (2) is inclined so as to form with the horizontal (s) an angle which can reach up to 90°.

13. Device according to one of claims 1 to 12, of which the envelope (2) is placed vertically, ozone or air injection means being provided at the base (in 10) of the device and flesh feeding means being provided at the top of the device, so that the ozone flows in reverse direction to the flesh.

14. Device according to one of claims 1 to 13, of which the transfer screw (5, 6) is set in rotation by means of a motor unit and variable speed drive assembly (100).

15. Device according to one of claims 2 to 14, of which each diffuser (30) is held in position in a support (31) fast with the tube (5), said support (31) being provided with a calibrated orifice (32).

16. Process for treating animal flesh consisting in a bubbling chamber, means for respectively introducing flesh and water into said chamber as well as means for injecting ozone or ozone-containing air into said chamber, a hollow tube (5) having a helical wall (6) of pitch (p), is provided in said envelope (2), mounted for rotating relatively to said envelope (2), the assembly constituting a transfer screw (5, 6), and ozone or ozone-containing air is injected into the free space existing between the inner wall of the envelope (2) and the tube (5), the flesh mixed with the water is brought in contact with the ozone for a long enough period to obtain a discoloration and a substantially total deodorizing of the flesh.

17. Process according to claim 16, of which the ozone injection is performed with bubbles of ozone of calibrated diameter by injection through diffusers having a calibrated pore diameter comprised between 60 and 90 micrometers.

18. Process according to claim 16 or 17 of which the ozone treatment is performed in two independent treatment zones, a first zone called preozonification zone and a second zone called postozonification zone, the air flow containing the ozone is introduced at a pumping speed which is lower in the preozonification zone with respect to the pumping speed of the postozonification zone, particularly the pumping speed in the preozonification zone is approximately equal to half the pumping speed in the postozonification zone.

**Patentansprüche**

1. Vorrichtung zur Behandlung von tierischem Fleisch, bestehend aus einem Behältnis, das eine Durchblaskammer, Aufgabevorrichtungen für tierisches Fleisch und Wasser in die besagte Kammer sowie eine Vorrichtung zur Einleitung von Ozon oder ozonhaltiger Luft in diese Kammer aufweist, in der eine Mischung aus tierischem Fleisch und Wasser mit Ozon in Kontakt gebracht wird, wobei die besagte Vorrichtung in besagtem Behältnis (2) ein hohles Rohr (5) mit einer spiralförmigen Trennwand (6) aufweist, deren Teilung p und die gegenüber dem Behältnis drehend montiert ist, wobei dieses hohle Rohr und diese spiralförmige Trennwand zusammen eine Förderschnecke (5,6) bilden und der freie Raum zwischen der besagten Innenwand dieses Behältnisses (2) und dem Rohr (5) die besagte Durchblaskammer (e) bilden.

2. Vorrichtung gemäß Anspruch 1, deren vorgenannte Vorrichtung zum Einleiten von Ozon in die Durchblaskammer (3) aus mehreren Zerstäubern (30) besteht.

3. Vorrichtung gemäß Anspruch 2, deren Zerstäuber (30) einen kalibrierten Porendurchmesser zwischen 60 und 90 Mikrometer aufweisen.

4. Vorrichtung gemäß Anspruch 2 oder 3, bei der pro Teilung zwei Zerstäuber (30) vorgesehen sind, die einander gegenüberliegen, und dadurch gekennzeichnet, daß jedes Zerstäuberpaar einen Winkel von 90° zur angrenzenden oberen und zur angrenzenden unteren Teilung bildet.

5. Vorrichtung gemäß den Ansprüchen 1 bis 4, deren Rohr (5) an seinen beiden Enden durch zwei Wände (15) und (16) verschlossen ist.

6. Vorrichtung gemäß einem der Ansprüche 1 bis 5, deren Rohr (5) eine Zwischenwand (17) aufweist, die eine erste Kammer (20) und eine zweite Kammer (21) teilt, die jeweils Vor- und Nachozonungskammern genannt werden.

7. Vorrichtung gemäß Anspruch 6, bei der in jede der Kammern (20) und (21) eine Spritze (10,11) führt, mit Hilfe derer unter sogenanntem Vorozonungsdruck (p1) und unter sogenanntem Nachozonungsdruck (p2) stehendes Ozon eingedüst wird.

8. Vorrichtung gemäß einem der Ansprüche 1 bis 7, dadurch gekennzeichnet, daß das in Gramm Ozon pro Kilogramm behandeltem tierischen Fleisch ausgedrückte Verhältnis zwischen 0,3 und 0,9 liegt.

9. Vorrichtung gemäß einem der Ansprüche 6 bis 8, dadurch gekennzeichnet, daß das in Gramm Ozon pro Kilogramm behandeltem tierischen Fleisch ausgedrückte Verhältnis in der Vorozonungskammer etwa 0,7 und in der Nachozonungskammer etwa 0,8 beträgt.

10. Vorrichtung gemäß einem der Ansprüche 1 bis 9, deren vorgenannte Eindüsungsvorrichtung für die Einleitung von Luft sorgen, die 10 bis 15 Gramm Ozon pro $Nm^3$ Luft enthält.

11. Vorrichtung gemäß einem der Ansprüche 1 bis 10, bei dem das Verhältnis zwischen Fleisch und Wasser etwa 1:3 beträgt.

12. Vorrichtung gemäß einem der Ansprüche 1 bis 11, bei der das Behältnis (2) gegenüber der Waagerechten (s) in einem Winkel geneigt ist, der bis zu 90° betragen kann.

13. Vorrichtung gemäß einem der Ansprüche 1 bis 12, bei der das Behältnis (2) vertikal angeordnet ist, wobei die Eindüsungsvorrichtungen für Ozon bzw. Luft am Ansatz (in 10) und die Aufgabevorrichtung für tierisches Fleisch oben an der Vorrichtung vorgesehen sind, dergestalt, daß das Ozon gegenströmig zum Fleisch geführt wird.

14. Vorrichtung gemäß einem der Ansprüche 1 bis 13, bei der die Zuführschnecke (5,6) mit Hilfe eines Motorwandlerblocks (100) in Drehung versetzt wird.

15. Vorrichtung gemäß einem der Ansprüche 2 bis 14, bei der jeder Zerstäuber (30) durch eine Halterung (31) an seinem Platz gehalten wird, wobei diese Halterung (31) fest verbunden ist mit dem Rohr (5) und eine kalibrierte Öffnung (32) aufweist.

16. Verfahren zur Behandlung von tierischem Fleisch, das das Vorhandensein eines Behältnisses vorsieht, das eine Durchblaskammer, Aufgabevorrichtungen für tierisches Fleisch und für Wasser in der besagten Kammer sowie Eindüsungsvorrichtungen für Ozon oder ozonhaltige Luft in die besagte Kammer enthält; des weiteren wird ein hohles Rohr (5) vorgesehen, das über eine spiralförmige Wand (6) verfügt, deren Teilung p ist in besagtem Behältnis (2) und die drehend montiert ist gegenüber diesem Behältnis (2), wobei das Ganze eine Förderschnecke (5,6) bildet; in den freien Raum zwischen der Innenwand des Behältnisses (2) und des Rohrs (5) wird Ozon oder ozonhaltige Luft eingedüst, wodurch ein Kontakt hergestellt wird zwischen dem mit Wasser gemischten Fleisch, und zwar über einen genügend langen Zeitraum, damit man eine deutliche Entfärbung und Desodorisierung des Fleisches erreicht.

17. Verfahren gemäß Anspruch 16, bei dem die Einleitung des Ozons in Form von Ozonblasen kalibrierten Durchmessers durch Einspritzung über Zerstäuber mit einem kalibrierten Porendurchmesser zwischen 60 und 90 Mikrometer erfolgt.

18. Verfahren gemäß Anspruch 16 oder 17, bei dem die Behandlung mit Ozon in zwei voneinander getrennten Bereichen erfolgt, und zwar in einem ersten, Vorozonungsbereich genannten sowie in einem zweiten, Nachozonungsbereich genannten Bereich, wobei die in den Vorozonungsbereich eingeleitete Menge ozonhaltiger Luft geringer ist als die in den Nachozonungsbereich eingeleitete und insbesondere die Menge im Vorozonungsbereich etwa gleich der halben Menge im Nachozonungsbereich ist.

FIG.1

FIG.2

EP 0 284 502 B1